Europäisches Patentamt

**European Patent Office**

Office européen des brevets

(11) Veröffentlichungsnummer: **0 243 814**

**A2**

(12) **EUROPÄISCHE PATENTANMELDUNG**

(21) Anmeldenummer: **87105655.2**

(22) Anmeldetag: **16.04.87**

(51) Int. Cl.⁴: **B29C 67/22** , B30B 5/06 , B32B 35/00

(30) Priorität: **02.05.86 DE 3614879**

(43) Veröffentlichungstag der Anmeldung:
**04.11.87 Patentblatt 87/45**

(84) Benannte Vertragsstaaten:
**DE FR GB**

(71) Anmelder: **MASCHINENFABRIK HENNECKE GMBH**
**Postfach 1180**
**D-5205 St. Augustin 1(DE)**

(72) Erfinder: **Proksa, Ferdinand, Dr.**
**Am Arenzberg 9**
**D-5090 Leverkusen 3(DE)**
Erfinder: **Sulzbach, Hans-Michael**
**Hermann-Löns-Strasse 12**
**D-5330 Königswinter 21(DE)**

(74) Vertreter: **Müller, Heinz-Gerd, Dipl.-Ing. et al**
**BAYER AG Konzernverwaltung RP**
**Patentabteilung**
**D-5090 Leverkusen 1, Bayerwerk(DE)**

(54) **Verfahren und Doppeltransportband zum Herstellen von mit Deckschichten versehenen Schaumstoffbahnen aus einem fliessfähigen Reaktionsgemisch.**

(57) Um bei Doppeltransportbändern zum kontinuierlichen Herstellen von mit Deckschichten (5, 6) versehenen Schaumstoffbahnen (7) aus einem fließfähigen Reaktionsgemisch eine durch verschiedene Einflüsse bedingte Relativgeschwindigkeit zwischen den beiden Transportbändern (1, 2) zu vermeiden, wird jedem Transportband (1, 2) ein eigener, vom anderen mechanisch entkoppelter elektrischer Antriebsmotor (16, 17) zugeordnet, welche über eine Regelung (26) miteinander verbunden sind.

**EP 0 243 814 A2**

## Verfahren und Doppeltransportband zum Herstellen von mit Deckschichten versehenen Schaumstoffbahnen aus einem fließfähigen Reaktionsgemisch

Die Erfindung betrifft ein Verfahren und ein Doppeltransportband zum Herstellen von mit Deckschichten versehenen Schaumstoffbahnen aus einem fließfähigen Reaktionsgemisch auf einem aus einem unteren Transportband und einem oberen Transportband bestehenden Doppeltransportband, welche gleichförmig angetrieben werden.

Man war bisher der Meinung, durch einen gemeinsamen Antriebsmotor und eine mechanische Koppelung über Kettentrieb oder Zahnradtrieb den absoluten Gleichlauf sicherstellen zu können.

In den letzten Jahren sind derartige Doppeltransportbänder immer größer, insbesondere länger geworden und werden im Interesse der Wirtschaftlichkeit an der Granze ihrer Leistungsfähigkeit mit hohen Umlaufgeschwindigkeiten betrieben. Durch die längeren Transportbänder addieren sich unter Umständen noch mehr Fertigungstoleranzen der Einzelteile nachteilig und zum anderen hat sich gezeigt, daß durch Beheizung der Reaktionszone durch die aufsteigende Wärme sich das obere Transportband in der Regel mehr dehnt als das untere. Wird die Einlaufzone beheizt und dabei das untere Transportband durch die Einlaufzone geführt, so kann auch das untere Transportband eine größere Dehnung aufweisen. Während der Betriebszeit addieren sich die unterschiedlichen Dehnungen auf. Da einerseits beide Transportbänder mit der gleichen Drehzahl angetrieben werden und andererseits zwischen den beiden Transportbändern über die in der Fertigung begriffene Schaumstoffbahn ein Kraftschluß besteht, treten mit der Zeit bei längerem Betrieb zwangsläufig Störungen auf. Handelt es sich um Plattenbänder, welche über sogenannte Polygonräder angetrieben werden, kann es vorkommen, daß die Führungsketten der Transportbänder an den Antriebsrädern von Zeit zu Zeit überspringen. Bei Doppeltransportbändern, welche einen Antrieb über Mitnehmer aufweisen, kann es vorkommen, daß eines der beiden Transportbänder nur über den Kraftschluß mit der Schaumstoffbahn angetrieben wird. Bei Doppeltransportbändern, welche mit fugenlosen Gewebebändern, Kautschukbändern oder Stahlbändern ausgestattet sind, welche über Walzen durch Reibschluß angetrieben werden, entsteht ein entsprechender Schlupf. Der Umlauf der Transportbänder wird unruhig und insbesondere bei Plattenbändern prägen sich die Plattenkanten des öfteren in die Deckschichten ein.

Ohne die eigentliche Ursache erkannt zu haben, ist man bisher so verfahren, daß man das Doppeltransportband nach einer gewissen Betriebszeit, sobald sich die Störungen häuften, für eine Zeit abgestellt hat. Die Transport bänder konnten dann wieder abkühlen und bei neuerlichem Betrieb schaukelte sich der Fehler wieder zu erneuten Störungen auf.

Es besteht die Aufgabe, ein Verfahren zu finden bzw. das bekannte Doppeltransportband so zu verbessern, daß ein reibungsloser Betrieb sichergestellt ist, indem jegliche Relativgeschwindigkeit zwischen den Transportbändern vermieden wird.

Diese Aufgabe wird dadurch gelöst, daß die beiden Transportbänder mechanisch entkoppelt, getrennt voneinander angetrieben und die Antriebsleistungen dabei im Sinne einer zueinander exakt gleichen Umlaufgeschwindigkeit der Transportbänder geregelt werden.

Auf diese Weise wird durch unterschiedliche Dehnungen, Fertigungstoleranzen usw. eine zwischen den beiden Bändern entstehende Relativgeschwindigkeit kompensiert und durch die mechanische Entkoppelung des Antriebes wird die physikalische Überbestimmung des Systems aufgehoben. Dadurch tritt über die in der Fertigung begriffene Schaumstoffbahn nur ein minimaler Kraftfluß auf. Das neue Verfahren läßt sich bei allen im Stand der Technik erwähnten Ausführungsformen von Doppeltransportbändern erfolgreich anwenden.

Gemäß einer besonderen Durchführungsform des Verfahrens werden sowohl die Antriebsleistung des oberen Transportbandes als auch diejenige des unteren Transportbandes geregelt.

Alternativ dazu wird die Antriebsleistung des einen Transportbandes konstant gehalten und jene des anderen Transportbandes geregelt.

Als Regelgrößen werden vorzugsweise die von den elektrischen Antriebsmotoren aufgenommenen Ströme verwendet.

Alternativ werden als Regelgrößen die Antriebsmomente erfaßt.

Soweit es sich um Transportbänder handelt, welche mittels Mitnehmern und Anschlägen bewegt werden, läßt sich als Regelgröße auch die Schubkraft der gegen die Anschläge drückenden Mitnehmer erfassen.

Das Doppeltransportband zum kontinuierlichen Herstellen von mit Deckschichten versehenen Schaumstoffbahnen aus einem fließfähigen Reaktionsgemisch geht aus von einem mit einem Antrieb versehenen oberen Transportband und einem unteren Transportband.

Das Neue ist darin zu sehen, daß jedem der beiden Transportbänder ein eigener, vom anderen mechanisch entkoppelter elektrischer Antriebsmotor zugeordnet ist und diese Antriebsmotoren über eine Regelung miteinander verbunden sind.

Dabei erfolgt die Regelung der Antriebsleistungen im Sinne einer zueinander exakt gleichen Umlaufgeschwindigkeit der Transportbänder.

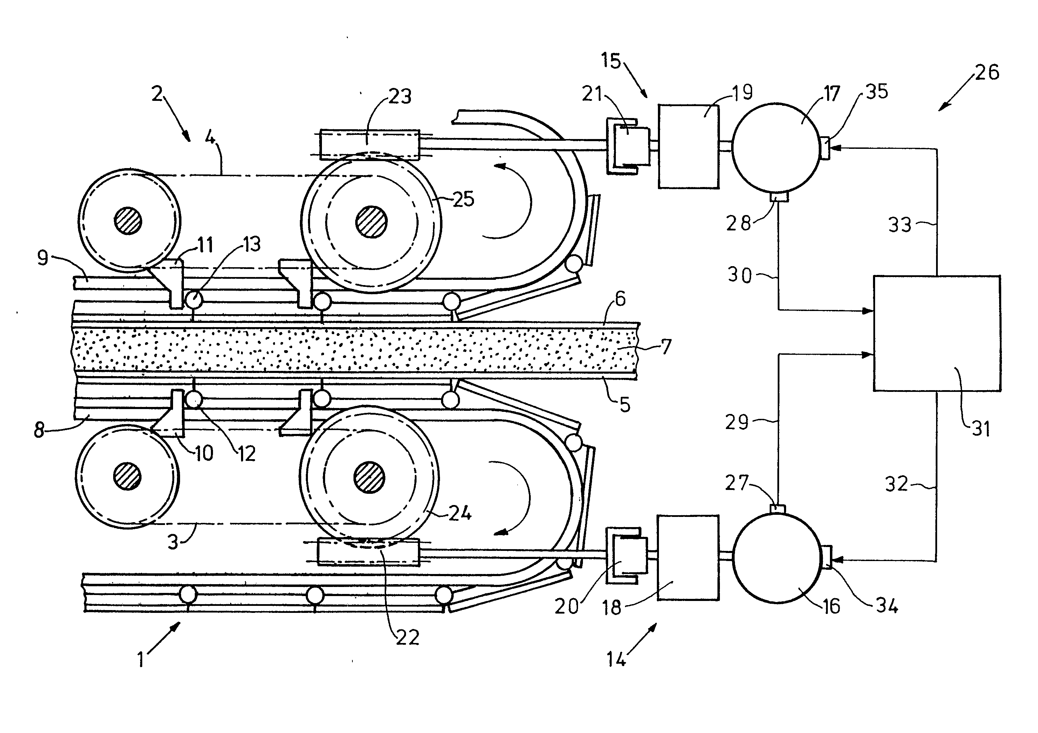

In der Zeichnung ist das neue Doppeltransportband in einem Ausführungsbeispiel rein schematisch dargestellt und nachstehend näher erläutert:

Das Doppeltransportband besteht aus einem unteren Transportband 1 und einem oberen Transportband 2, welche über Mitnehmerketten 3, 4 angetrieben werden. Zwischen den Transportbändern 1, 2 befindet sich der von einer in der Fertigung begriffenen, mit Deckschichten 5, 6 versehenen Schaumstoffbahn 7 ausgefüllte Schäumraum. Die Transportbänder 1, 2 sind in Schienen 8, 9 geführt. Die Mitnehmerketten 3, 4 sind mit Mitnehmern 10, 11 ausgestattet, welche gegen Anschläge 12, 13 der Transportbänder 1, 2 greifen. Jeder Mitnehmerkette 3, 4 ist ein besonderer Antrieb 14, 15 zugeordnet. Diese Antriebe 14, 15 bestehen jeweils aus einem elektrischen Antriebsmotor 16, 17, einem Getriebe 18, 19, einer Kupplung 20, 21 und einem Schneckentrieb 22, 23, welche mit einem die Mitnehmerkette 3, 4 antreibenden Zahnrad 24, 25 kämmen. Den Antriebsmotoren 16, 17 ist eine gemeinsame Regelung 26 zugeordnet. Sie besteht aus den lediglich angedeuteten Meßstellen 27, 28, von denen über Meßleitungen 29, 30 die von den Antriebsmotoren 16, 17 aufgenommenen Ströme $I_1$ und $I_2$ an den Regler 31 gegeben werden. Von diesem werden die Antriebsmotoren 16, 17 über Meßleitungen 32, 33 und angedeutete Stellglieder 34, 35 im Sinne eines konstanten Verhältnisses der Leistungsaufnahmen geregelt. Die exakte Synchronisation zwischen Ober-und Unterband wird durch den Kraftschluß über die Schaumstoffbahn erreicht. Die dabei in der Schaumstoffbahn auftretenden Kräfte werden durch die vorgegebene Aufteilung der Antriebsleistung minimiert.

Im Falle, daß man das Antriebsmoment als Regelgröße nehmen möchte, legt man die Meßstelle 27, 18 jeweils an die Abtriebswelle des Antriebsmotors 16, 17.

Bei der in der Zeichnung dargestellten Ausführungsform des Doppeltransportbandes kann man auch die von den Mitnehmern 10, 11 auf die Anschläge 12, 13 wirkende Kraft als Regelgröße benutzen. Man muß dann mindestens an einem Mitnehmer 10, 11 oder mindestens einem Anschlag 12, 13 jedes Transportbandes 1, 2 eine Kraftmeßdose als Meßstelle 27, 28 vorsehen. Da sich insbesondere Wärmedehnungen der Transportbänder reichlich langsam bemerkbar machen, reicht eine Meßstelle pro Transportband, da nur eine Messung pro Umlauf stattzufinden braucht.

## Ansprüche

1. Verfahren zum Herstellen von mit Deckschichten versehenen Schaumstoffbahnen aus einem fließfähigen Reaktionsgemisch auf einem aus einem unteren Transportband (1) und einem oberen Transportband (2) bestehenden Doppeltransportband, welche gleichförmig angetrieben werden, dadurch gekennzeichnet, daß die beiden Transportbänder (1, 2) mechanisch entkoppelt, getrennt voneinander angetrieben und die Antriebsleistungen dabei im Sinne einer zueinander exakt gleichen Umlaufgeschwindigkeit der Transportbänder (1, 2) geregelt werden.

2. Verfahren nach Anspurch 1, dadurch gekennzeichnet, daß sowohl die Antriebsleistung des oberen Transportbandes (2) als auch diejenige des unteren Transportbandes (1) geregelt werden.

3. Verfahren nach einem der Ansprüche 1 oder 2, dadurch gekennzeichnet, daß das Verhältnis der Antriebsleistungen zueinander geregelt wird.

4. Verfahren nach einem der Ansprüche 1 bis 3, dadurch gekennzeichnet, daß die Antriebsleistung des einen Transportbandes (1, 2) konstant gehalten und jene des anderen Transportbandes (1, 2) geregelt wird.

5. Verfahren nach einem der Ansprüche 1 bis 4, dadurch gekennzeichnet, daß als Regelgrößen die von den elektrischen Antrieben (16, 17) aufgenommenen Ströme verwendet werden.

6. Verfahren nach einem der Ansprüche 1 bis 4, dadurch gekennzeichnet, daß als Regelgrößen die Antriebsmomente erfaßt werden.

7. Verfahren nach einem der Ansprüche 1 bis 4, wobei die Transportbänder (1, 2) mittels Mitnehmern (10, 11) und Anschlägen (13, 14) gezogen werden, dadurch gekennzeichnet, daß als Regelgröße die Schubkraft der gegen die Anschläge (13, 14) wirkenden Mitnehmer erfaßt wird.

8. Doppeltransportband zum kontinuierlichen Herstellen von mit Deckschichten (5, 6) versehenen Schaumstoffbahnen (7) aus einem fließfähigen Reaktionsgemisch, bestehend aus einem mit einem Antrieb versehenen oberen Transportband (2) und einem unteren Transportband (1), dadurch gekennzeichnet, daß jedem der beiden Transportbänder (1, 2) ein eigener, vom anderen mechanisch entkoppelter elektrischer Antriebsmotor (17) zugeordnet ist und diese Antriebsmotoren (16, 17) über eine Regelung (26) miteinander verbunden sind.

He 81